# EUROPEAN PATENT APPLICATION

(11) **EP 4 068 552 A1**
(43) Date of publication of application: **05.10.2022**
(21) Application number: 22160479.6
(22) Date of filing: 07.03.2022
(51) Int. Cl.: H02J 3/14, H02J 3/32, H02J 13/00

(54) **CONTROL DEVICE OF ADJUSTING ELECTRIC POWER REMOTELY AND METHOD OF OPERATING THE SAME**

(30) Priority: 01.04.2021 TW 110112275
(71) Applicant: Reduce Carbon Energy Develop Co., Ltd., New Taipei City 238 (TW)
(72) Inventor: CHEN, FU-CHIEH, 238 NEW TAIPEI CITY (TW)
(74) Representative: Brown, Michael Stanley

(57) **Abstract**

A control device of adjusting electric power remotely contains: multiple stations (11), multiple areas (10), at least one control module (20), and a content management system (CMS) (30). A respective one station (11) includes at least one load (40) and at least one energy storage apparatus (12) having at least one secondary battery. A respective one area (10) includes the multiple stations (11). A respective one control module (20) includes a microprocessor (21), a control unit (22), and a wireless communication unit (23). The CMS (30) is configured to record and manage the respective one station (11) and the at least one energy storage apparatus (12) and to command, control and order the respective one control module (20). The CMS (30) is connected with the power supply unit (14) and the respective one control module (20) in a wirelessly and receives a power dispatching instruction sent from the power supply unit, and the power dispatching instruction has the respective one area (10), a starting time, and an ending time.

## Description

### FIELD OF THE INVENTION

The present invention relates to an adjusting electric power remotely in an area.

### BACKGROUND OF THE INVENTION

Electricity consumption in an area of an electrical grid can be divided into peak time and off-peak time, and the operating reserve of the power supply unit (Taiwan Power Company in Taiwan) needs to ensure that the peak time can also meet the supply of electricity demand. However, if the total electricity demand in a certain area at a certain time only slightly exceeds the backup capacity, the solution of the power supply unit is to urgently stop the power supply to the area or a specific electricity user to reduce the electricity load, but The problem that the power supply unit cannot guarantee the stability of the power supply is formed. To eliminate this dilemma, the power supply unit can only build power plants or increase generator sets to increase the backup capacity. However, in order to meet the slightly increased demand for electricity, a large amount of budget is invested, and it is worth pondering whether it is in line with economic benefits. Moreover, the power generation of a power plant or generator set is often much higher than the aforementioned situation of "the total electricity demand only slightly exceeds the reserve capacity", and there will be a waste of resources that cannot be effectively utilized.

The present invention has arisen to mitigate and/or obviate the afore-described disadvantages.

### SUMMARY OF THE INVENTION

The primary objective of the present invention is to provide a control device which is capable of adjusting electric power remotely based on a demand of an electric power to reduce a spare capacity of the power supply unit.

To obtain above-mentioned objective, a control device of adjusting electric power remotely provided by the present invention contains: multiple stations, multiple areas, at least one control module, and a content management system (CMS).

A respective one station includes at least one load and at least one energy storage apparatus. The at least one energy storage apparatus includes at least one secondary battery, the at least one load and the at least one energy storage apparatus are supplied the electric power by a mains system which is managed by a power supply unit.

A respective one area includes the multiple stations.

The at least one control module is configured to mate with the at least one energy storage apparatus, a respective one of the at least one control module includes a microprocessor, a control unit, and a wireless communication unit. The microprocessor is configured to command, control, order, and manage the control unit and a metering unit. The wireless communication unit is configured to execute wireless communication, and the control unit is configured to control openings and closings of a circuit between the mains system and the load, a circuit between the mains system and the at least one energy storage apparatus, and a circuit between the at least one energy storage apparatus and the load.

The content management system (CMS) is configured to record and manage the respective one station and the at least one energy storage device of the respective one area and to command, control and order the respective one control module to operate. The CMS is connected with the power supply unit and the respective one control module in a wireless communication manner. The CMS receives a power dispatching instruction sent from the power supply unit, and the power dispatching instruction has the respective one area, a starting time, and an ending time. The CMS sends the power dispatching instruction to the respective one control module of the respective one area. The microprocessor of the respective one control module receives the power dispatching instruction and orders the control unit to have the closing of the circuit between the mains system and the load, and the opening of the circuit between the at least one secondary battery of the at least one energy storage apparatus and the load in the starting time so that the load supplies the electric power to the at least one energy storage apparatus. The control module orders the control unit to have a closing of a circuit between the at least one secondary battery and the load in a designated stop time and to start the mains system, such that the mains system supplies the electricity power to the load and the at least one secondary battery.

Thereby, the power dispatching instruction is sent by the power supply unit to order the control unit to have the closing of the circuit between the mains system and the load in the starting time and to have the opening of the circuit between the at least one secondary battery of the at least one energy storage apparatus and the load so that the at least one energy storage apparatus supplies the electric power to the load, thus reducing consumption of the electric power in a peak time and a serape capacity of the power supply unit. On the other hand, the at least one energy storage device is capable of adjusting the electric power based on the demand of the electric power.

### BRIEF DESCRIPTION OF THE DRAWINGS

FIG. 1 is a schematic view showing the assembly of a control device of adjusting electric power remotely according to a preferred embodiment of the present invention.
FIG. 2 is another schematic view showing the assembly of the control device of adjusting electric power remotely according to the preferred embodiment of the present invention.
FIG. 3 is a flow chart of a method of operating the control device of adjusting electric power remotely according to the preferred embodiment of the present invention.

### DETAILED DESCRIPTION OF THE PREFERRED EMBODIMENTS

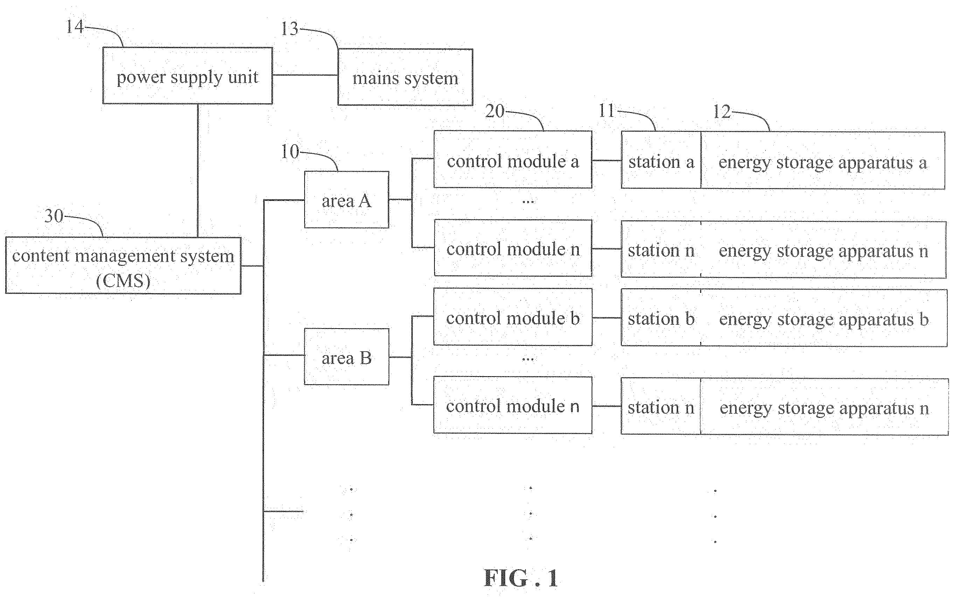

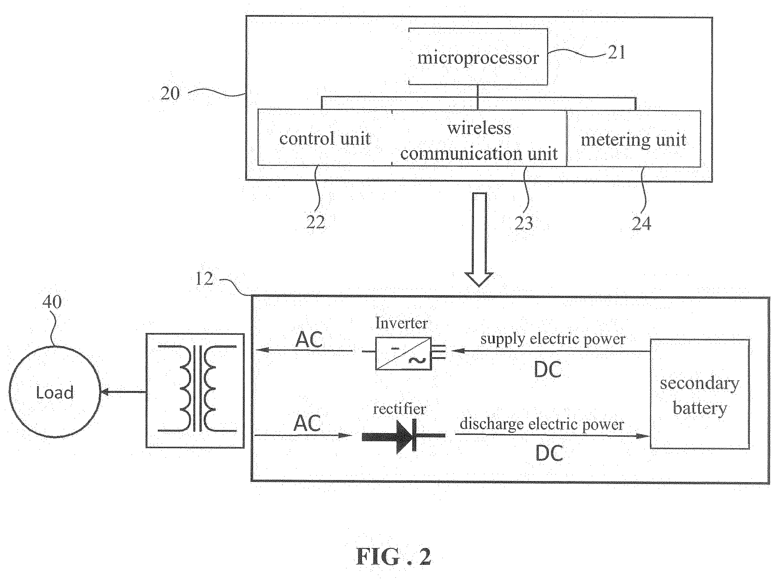

With reference to FIGS. 1 and 2, a control device of adjusting electric power remotely according to a preferred embodiment of the present invention comprises:
multiple stations (11), a respective one station (11) including at least one energy storage apparatus (12), wherein the respective one station (11) includes any one of a cell site, a factory/manufacturing plant, a medical unit, a financial institution, and a building, wherein the at least one energy storage apparatus (12) includes at least one uninterruptible power supply (UPS) configured to supply the electric power to at least one load (40) of the cell site when a mains system (as known as power grid) (13) operates or does not operate, and the at least one UPS has at least one secondary battery. The respective one station (11) and the at least one energy storage apparatus (12) is well-known art, so further remarks are omitted. Electricity power of the load (40) and the at least one energy storage apparatus (12) are supplied by a power grid (13), and electricity power of the power grid (13) are supplied by a power plant which commands, controls, orders and manages a power generation, wherein the power plant has a power supply unit (14), such as a Taiwan Power Company.

The control device further comprises multiple areas (10), a respective one area includes the multiple station (11).

At least one control module (20) is configured to mate with the at least one energy storage apparatus (12), wherein a respective one of the at least one control module (20) includes a microprocessor (21), a control unit (22), a wireless communication unit (23), and a metering unit (24). Electricity power of the respective one control module (20) is supplied by the mains system (13). The microprocessor (21) is electrically coupled with the control unit (22) and the metering unit (24) and is configured to command, control, order, and manage the control unit (22) and the metering unit (24). The wireless communication unit (23) is configured to execute wireless communication. The control unit (22) is configured to control openings and closings of a circuit between the mains system (13) and the load (40), a circuit between the mains system (13) and the at least one energy storage apparatus (12), and a circuit between the at least one energy storage apparatus (12) and the load (40). The metering unit (24) is configured to calculate a duration (i.e. from a starting time to an ending time) of the closing of the circuit between the mains system (13) and the load (40), wherein the duration of the closing of the circuit between the mains system (13) and the load (40) and an electricity (Wh) of a duration(i.e. from a starting time to an ending time) of supplying electric power of the at least one energy storage apparatus (12) to the load (40) are a parameter by which a subsidy incentive of a power supply is calculated by the power supply unit.

The control device of adjusting the electric power remotely further comprises a content management system (CMS) (30) which is a computer or a mobile device having power conditioning application (App) and configured to record and manage multiple station (11) and the at least one energy storage apparatus (12) of a respective one area (10) and to command, control and order the respective one control module (20) to operate. The CMS (30) is connected with the power supply unit (14) and the respective one control module (20) in a wireless communication manner. The CMS (30) receives a power dispatching instruction sent from the power supply unit (14), wherein the power dispatching instruction has the respective one area (10), a starting time, and an ending time. The CMS (30) sends the power dispatching instruction to the respective one control module (20) of the respective one area (10). The microprocessor (21) of the respective one control module (20) receives the power dispatching instruction and orders the control unit (22) to have the closing of the circuit between the mains system (13) and the load (40), and the opening of the circuit between the at least one secondary battery of the at least one energy storage apparatus (12) and the load 40 in the starting time. Thereafter, the control module (20) orders the control unit (22) to have a closing of a circuit between the at least one secondary battery and the load (40) in a designated stop time and to start the mains system (13), such that the mains system (13) supplies the electricity power to the load 40 and the at least one secondary battery. The metering unit (24) calculates the subsidy incentive of the power supply, and the subsidy incentive of the power supply is saved in the CMS (30) and is sent to the power supply unit (14) to apply a subsidy award.

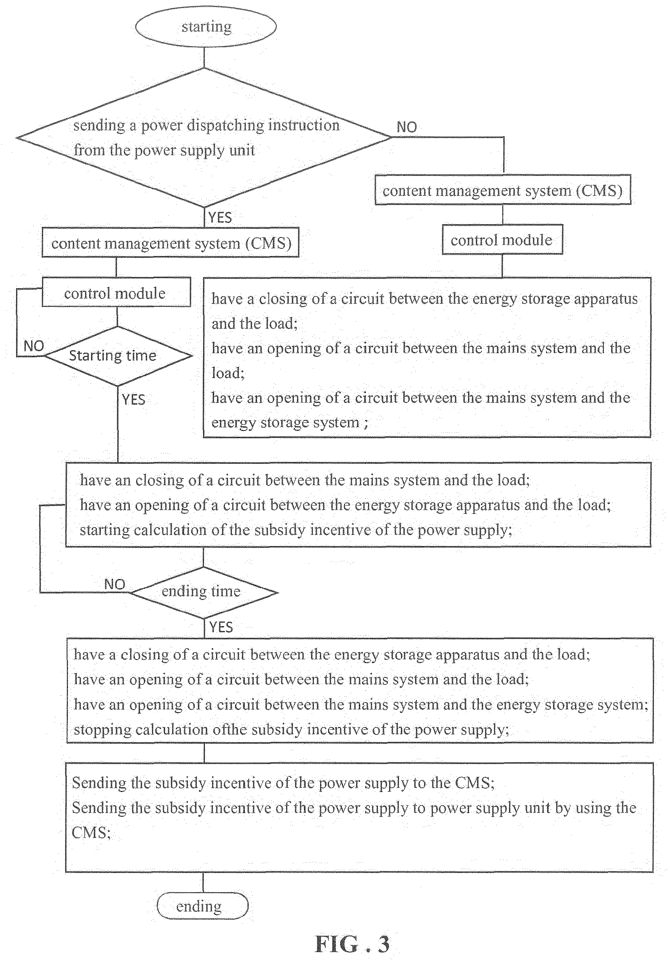

Referring to FIG. 3, a method of operating the control device of adjusting the electric power remotely according to the preferred embodiment of the present invention comprises:
step A) sending the power dispatching instruction to a CMS (30), when acquiring or predicting a total demand of the electric power is more than a spare capacity of the power supply unit (14) in the respective one area (10) in a predetermined time, wherein the power dispatching instruction has the respective one area (10), a starting time, and an ending time of dispatching the electric power;
step B) receiving the power dispatching instruction by using the CMS (30) and sending the power dispatching instruction to the respective control module (20) of the respective one area (10), wherein the microprocessor (21) of the respective control module (20) receives the power dispatching instruction and orders the control unit (22) to have the closing of the circuit between the mains system 13 and the load 40 in the starting time and to have the opening of the circuit between the at least one secondary battery of the at least one energy storage apparatus (12) and the load (40) so that the at least one energy storage apparatus (12) supplies the electric power to the load (40), and the metering unit (24) calculates the subsidy incentive of the power supply from the starting time to the ending time;
step C) ordering the control unit (22) to have the closing of the circuit between the at least one secondary battery of the at least one storage apparatus (12) and the load (40) by way of the microprocessor (21), have the opening of the circuit between the mains system (13) and the load (40), and have the opening of the circuit between the mains system (13) and the at least one secondary battery of the at least one storage apparatus (12), when reaching the ending time, such that the mains system (13) supplies the electric power to the load 40 and the at least one energy storage apparatus (12), wherein the metering unit (24) stops calculating the subsidy incentive of the power supply in the stopping time, and the subsidy incentive of the power supply is sent to the CMS (30) via the microprocessor (21); and
step D) sending the subsidy incentive of the power supply to the power supply unit (14) by using the CMS (30) so as to apply subsidy award.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention

## Claims

1. A control device of adjusting electric power remotely comprising;
multiple stations (11), a respective one station (11) including at least one load (40) and at least one energy storage apparatus (12), wherein the at least one energy storage apparatus (12) includes at least one secondary battery, the at least one load (40) and the at least one energy storage apparatus (12) are supplied the electric power by a mains system (13) which is managed by a power supply unit (14);
multiple areas (10), a respective one area (10) including the multiple station (11);
at least one control module (20) configured to mate with the at least one energy storage apparatus (12), wherein a respective one of the at least one control module (20) includes a microprocessor (21), a control unit (22), and a wireless communication unit (23); the microprocessor (21) is configured to command, control, order, and manage the control unit (22) and a metering unit (24); the wireless communication unit (23) is configured to execute wireless communication; and the control unit (22) is configured to control openings and closings of a circuit between the mains system (13) and the load (40), a circuit between the mains system (13) and the at least one energy storage apparatus (12), and a circuit between the at least one energy storage apparatus (12) and the load (40);
a content management system (CMS) (30) configured to record and manage the respective one station (11) and the at least one energy storage apparatus (12) of the respective one area (10) and to command, control and order the respective one control module (20) to operate; wherein the CMS (30) is connected with the power supply unit (14) and the respective one control module (20) in a wireless communication manner; the CMS (30) receives a power dispatching instruction sent from the power supply unit (14), and the power dispatching instruction has the respective one area (10), a starting time, and an ending time; wherein the CMS (30) sends the power dispatching instruction to the respective one control module (20) of the respective one area (10); the microprocessor (21) of the respective one control module (20) receives the power dispatching instruction and orders the control unit (22) to have the closing of the circuit between the mains system (13) and the load (40), and the opening of the circuit between the at least one secondary battery of the at least one energy storage apparatus (12) and the load (40) in the starting time so that the load (40) supplies the electric power to the at least one energy storage apparatus (12); and the control module (20) orders the control unit (22) to have a closing of a circuit between the at least one secondary battery and the load (40) in a designated stop time and to start the mains system (13), such that the mains system (13) supplies the electricity power to the load (40) and the at least one secondary battery.

2. The control device as claimed in claim 1 further comprising: the metering unit (24) electrically coupled with the microprocessor (21) and configured to calculate a duration of the closing of the circuit between the mains system (13) and the load (40), wherein the duration of the closing of the circuit between the mains system (13) and the load (40) and an electricity of a duration of supplying electric power of the at least one energy storage apparatus (12) to the load (40) are a parameter by which a subsidy incentive of a power supply is calculated by the power supply unit; and the subsidy incentive of the power supply is saved in the CMS (30) and is sent to the power supply unit (14) to apply a subsidy award.

3. The control device as claimed in claim 1, wherein the respective one station (11) is a cell site, and the at least one energy storage apparatus (12) includes at least one uninterruptible power supply (UPS) configured to supply the electric power to the cell site.

4. The control device as claimed in claim 1, wherein a content management system (CMS) (30) is a computer or a mobile device having power conditioning application (App).

5. A method of operating the control device of adjusting the electric power remotely comprises:
step A) sending a power dispatching instruction to a content management system (CMS) (30), when acquiring or predicting a total demand of the electric power is more than a spare capacity of a power supply unit (14) in a respective one of multiple areas (10) in a predetermined time, wherein the power dispatching instruction has the respective one area (10), a starting time, and an ending time of dispatching the electric power;
step B) receiving the power dispatching instruction by using the CMS (30) and sending the power dispatching instruction to a respective one of at least one control modules (20) of the respective one area (10), wherein a microprocessor (21) of the respective control module (20) receives the power dispatching instruction and orders the control unit (22) to have a closing of a circuit between the mains system (13) and the load (40) in the starting time and to have an opening of a circuit between at least one energy storage apparatus (12) and the load (40) so that the at least one energy storage apparatus (12) supplies the electric power to the load (40) from the starting time to the ending time;
step C) ordering the control unit (22) to have a closing of a circuit between the at least one secondary battery of the at least one storage apparatus (12) and the load (40) by way of the microprocessor (21), have an opening of a circuit between the mains system (13) and the load (40), and have an opening of a circuit between the mains system (13) and the at least one storage apparatus (12), when reaching the ending time, such that the mains system (13) supplies the electric power to the load (40) and the at least one energy storage apparatus (12).

6. The method as claimed in claim 5, wherein in the step B), the metering unit (24) calculates the subsidy incentive of the power supply from the starting time; and in the step C), the metering unit (24) stops calculating the subsidy incentive of the power supply in the stopping time, and the subsidy incentive of the power supply is sent to the CMS (30) via the microprocessor (21).

7. The method as claimed in claim 6 further comprising step D) sending the subsidy incentive of the power supply to the power supply unit (14) by using the CMS (30) so as to apply subsidy award.
